(19) Europäisches Patentamt
European Patent Office
Office européen des brevets

(11) **EP 2 562 571 B1**

(12) **EUROPEAN PATENT SPECIFICATION**

(45) Date of publication and mention
of the grant of the patent:
**28.12.2016 Bulletin 2016/52**

(51) Int Cl.:
**C03C 3/06** *(2006.01)*    **C03C 13/04** *(2006.01)*
**G02B 6/02** *(2006.01)*    **G02B 6/036** *(2006.01)*

(21) Application number: **12181707.6**

(22) Date of filing: **24.08.2012**

(54) **Optical fiber**

Glasfaser

Fibre optique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2011 JP 2011183860
02.03.2012 JP 2012047010**

(43) Date of publication of application:
**27.02.2013 Bulletin 2013/09**

(73) Proprietor: **Sumitomo Electric Industries, Ltd.
Osaka-shi,
Osaka 541 (JP)**

(72) Inventors:
• **Hirano, Masaaki**
  **Kanagawa (JP)**
• **Haruna, Tetsuya**
  **Kanagawa (JP)**
• **Tamura, Yoshiaki**
  **Kanagawa (JP)**
• **Yamamoto, Yoshinori**
  **Kanagawa (JP)**

(74) Representative: **Hoffmann Eitle
Patent- und Rechtsanwälte PartmbB
Arabellastraße 30
81925 München (DE)**

(56) References cited:
EP-A1- 1 116 970    EP-A1- 1 120 671
EP-A1- 1 978 383    EP-A2- 1 336 878
JP-A- H11 167 038

**Description**

BACKGROUND OF THE INVENTION

Field of the Invention

The present invention relates to an optical fiber.

Description of the Related Art

In an optical communication system, it is desirable to improve an optical signal-to-noise ratio (OSNR). The improvement in OSNR is particularly important for a communication using a digital coherent detection. By improving OSNR, the capacity of transmission signals can be increased, the transmission distance of the optical communication system can be increased, and the interval between repeaters can be increased. Thus, the performance of the optical communication system can be improved.

To improve OSNR, it is important to reduce the non-linearity of an optical fiber used as an optical transmission line and to reduce the attenuation in the optical transmission line. To reduce the non-linearity generated in the optical fiber, the effective area Aeff of the optical fiber may be increased and the absolute value of chromatic dispersion of the optical fiber may be increased. There is known a non-dispersion shifted optical fiber in which the absolute value of chromatic dispersion is large and the effective area Aeff is increased (for example, International Publication No. 00/062106, Japanese Published Unexamined Patent Application No. 2005-202440, and International Publication No. 2011/066063).

However, the non dispersion shifted optical fiber with the increased effective area Aeff has a large dissimilar splice loss with respect to a standard single mode fiber (SSMF, an effective area Aeff in a wavelength band of 1.55 $\mu$m being about 80 $\mu$m$^2$) that is the ITU-T G.652 series, a dispersion shifted fiber (DSF, an effective area Aeff in a wavelength band of 1.55 $\mu$m being in a range from 50 $\mu$m$^2$ to 80 $\mu$m$^2$) that is the ITU-T G.653 series, and a non-zero dispersion shifted fiber (NZ-DSF) that is the ITU-T G.655 and G.656 series, these fibers which are already installed as optical transmission lines or used for optical fiber based devices in transmitters, receivers, repeaters and so on. As the result, OSNR may be decreased. A standard optical fiber of the ITU-T G.652 series has optical characteristics, such as a cable cutoff wavelength being 1260 nm or shorter, a nominal value of a mode field diameter (MFD) at a wavelength of 1310 nm being in a range from 8.6 $\mu$m to 9.5 $\mu$m, a zero-dispersion wavelength being in a range from 1300 nm to 1324 nm, and a dispersion slope at the zero-dispersion wavelength being 0.093 ps/nm$^2$/km or smaller.

U.S. Patent No. 6,421,489 discloses optical fibers having a large effective area Aeff and a small mode field diameter MFD in Table-1. However, these optical fibers are dispersion shifted fibers with a zero-dispersion wavelength in a range from 1508 nm to 1570 nm. Hence, the optical fibers have a small absolute value of chromatic dispersion, and the non-linear phenomenon likely occurs. Also, these optical fibers are expected to have a high bend loss (more particularly, micro-bend loss). In addition, these optical fibers may have a very long cutoff wavelength of 1857 nm or larger.

U.S. Patent No. 6,687,441 discloses optical fibers having a large effective area Aeff and a small mode field diameter MFD in Table-1. However, these optical fibers are dispersion shifted fibers with a zero-dispersion wavelength in a range from 1472 nm to 1579 nm. Also, these optical fibers contain a void at the center. Hence, it is expected that the productivity may be not high and the attenuation may be large. In addition, it can be easily expected that the splice loss be increased because the void of these optical fiber is collapsed during fusion splicing with other optical fiber and hence the waveguide structure is changed.

Document EP 1 978 383 A1 discloses an optical fiber having the features of the preamble portion of claim 1.

SUMMARY OF THE INVENTION

Accordingly, it is an object of the present invention to provide an optical fiber that is preferably used for an optical transmission line in an optical communication system and that can improve OSNR.

An optical fiber according to a first aspect of the present invention is an optical fiber including a core section and a cladding section. At a wavelength of 1550 nm, a "k value" expressed by k = 4Aeff/($\pi$MFD$^2$) is 1.08 or larger where Aeff is an effective area and MFD is a mode field diameter, a chromatic dispersion is +19.0 ps/nm/km or larger and +21.9 ps/nm/km or smaller, and the mode field diameter MFD is 10.3 $\mu$m or larger and 13.0 $\mu$m or smaller. Further, $r_1 < r_2 < r_3$ is established, $r_1$ being a radial position at which a refractive index becomes a minimum value $N_1$ in the core section, $r_2$ being a radial position at which the refractive index becomes a maximum value $N_2$ in the core section, and $r_3$ being a radius of the core section, and a relative refractive index difference $\Delta_{12}$ of the maximum value $N_2$ with respect to the minimum value $N_1$ of the refractive index in the core section is 0.05% or higher and 0.2% or lower.

In the optical fiber according to the first aspect, the effective area Aeff at the wavelength of 1550 nm may be

preferably 100 $\mu m^2$ or larger. An attenuation at the wavelength of 1550 nm may be preferably 0.19 dB/km or smaller. The core section may be preferably made of silica glass containing a halogen element with an average concentration of 1000 atomic parts per million (ppm) or larger and not containing a typical metal element or a transition metal element as a dopant with an average concentration larger than 0.01 atomic ppm. Also, the core section may preferably contain an alkali metal element with an average concentration in a range from 0.01 atomic ppm to 50 atomic ppm.

In the optical fiber according to the first aspect, a dissimilar splice loss between the optical fiber related to this invention and a standard single mode optical fiber may be preferably 0.4 dB or smaller at the wavelength of 1550 nm. An attenuation at the wavelength of 1550 nm may be preferably 0.19 dB/km or smaller when the optical fiber is wound around the periphery of a mandrel with a diameter of 220 mm, with a winding tension of 0.4 N or larger by a length of 10 km or larger.

Also, $R = r_3/r_2$ may be preferably larger than 1.0 and equal to or smaller than 8.0. The cladding section may preferably include at least a first cladding portion having a refractive index No and a second cladding portion arranged at the outer periphery of the first cladding portion and having a refractive index $N_{O2}$, No < $N_{O2}$ may be preferably established, and a relative refractive index difference $\Delta d$ of the second cladding portion with reference to the first cladding portion may be preferably 0.08% or higher.

In the optical fiber according to the first aspect, $R = r_3/r_2$ may be preferably larger than 1.0 and equal to or smaller than 5.4, and a relative refractive index difference $\Delta_{12}$ of the maximum value $N_2$ with respect to the minimum value $N_1$ of the refractive index in the core section may be preferably 0.05% or higher. (A of the first aspect)

Also, in the optical fiber according to the first aspect, $R = r_3/r_2$ may be preferably larger than 1.0 and equal to or smaller than 6.0. (B of the first aspect)

In the optical fiber according to the first aspect, $R = r_3/r_2$ may be also preferably 1.2 or larger..

In the optical fiber according to a second aspect of the present invention 4.5 $\mu m \leq r_3 \leq 7.0$ $\mu m$ is established. A relative refractive index difference $\Delta_{c2}$ of the maximum value $N_2$ with respect to a refractive index No at a radial position $r_O$ at a distance that is three times the radius $r_3$ from the center of the core section is 0.25% or higher and 0.55% or lower, and a relative refractive index difference $\Delta_{c1}$ of the minimum value $N_1$ with respect to the refractive index $N_O$ is 0.05% or higher.

In the optical fiber according to the above, $R = r_3/r_2$ may be also preferably 1.2 or larger.

The optical fiber according to the present invention is preferably used for an optical transmission line in an optical communication system and can improve OSNR.

BRIEF DESCRIPTION OF THE DRAWINGS

Figure 1 is a conceptual diagram showing a refractive index profile of an optical fiber.

Figure 2 is a conceptual diagram showing a refractive index profile of an optical fiber.

Figure 3 is a conceptual diagram showing a refractive index profile of an optical fiber.

Figure 4 is a graph showing the relationship between $\Delta_{12}$ and a k value.

Figure 5 is a graph showing the relationship between $R = r_3/r_2$ and a k value.

Figure 6 is a graph showing the relationship between a mode field diameter MFD and a dissimilar splice loss of an optical fiber with respect to a standard SMF and a non-zero dispersion shifted fiber.

Figures 7A and 7B are conceptual diagrams showing refractive index profiles of optical fibers.

Figure 8 is a conceptual diagram showing a refractive index profile of an optical fiber.

Figure 9 is a conceptual diagram showing a refractive index profile of each of optical fibers according to Examples 1 to 5.

Figure 10 is a conceptual diagram showing a refractive index profile of each of optical fibers according to Examples 6 to 10.

Figure 11 is a graph showing the relationship between $R = r_3/r_2$ and a k value.

Figure 12 is a graph showing the relationship between R = $r_3/r_2$ and a k value.

Figure 13 is a graph showing the relationship between Δd and a k value.

Figure 14 is a graph showing the contour line of k-values with respect to Δd and R.

DESCRIPTION OF THE PREFERRED EMBODIMENTS

An embodiment of the present invention is described below with reference to the accompanying figures. The figures are provided for description and do not intend to limit the scope of the invention. In the figures, the same reference signs refer the same portions to omit redundancy in the description. Relative ratios of dimensions in the figures are not necessarily correct.

An optical fiber according to an embodiment of the present invention is an optical fiber including a core section and a cladding section. At a wavelength of 1550 nm, a k value expressed by k = 4Aeff/(πMFD$^2$) is 1.08 or larger where Aeff is an effective area and MFD is a mode field diameter, a chromatic dispersion is +19.0 ps/nm/km or larger and +21.9 ps/nm/km or smaller, and the mode field diameter MFD is 10.3 μm or larger and 13.0 μm or smaller.

If the effective area Aeff is increased to be, for example, 100 μm$^2$ or larger at the wavelength of 1550 nm so as to reduce the non-linear phenomenon generated in the optical fiber, the mode field diameter MFD is simultaneously increased. The splice loss between such an optical fiber and SSMF (Aeff being about 80 μm$^2$) may be increased. The intensity of light input into an optical amplifier or an optical receiver is decreased by the amount of splice loss. Hence, OSNR of the optical transmission system may be degraded.

Owing to this, the effective area Aeff of the optical fiber is increased while the mode field diameter MFD is relatively decreased, so that the dissimilar splice loss between this optical fiber and other optical fiber can be decreased. That is to say, the k value expressed by the equation k = 4Aeff/(πMFD$^2$) is increased. If the k value is large, even if the mode field diameter MFD is not changed, the effective area Aeff can be increased.

The index profile of the core of SSMF is a stepped shape or a shape of the α-th power with the highest refractive index at the center portion. The SSMF has typically a k value of about 1.0. For example, a SSMF having the core section with a refractive index profile approximated with a parameter α of about 4 exhibits an effective area Aeff of 85 μm$^2$ and a mode field diameter MFD of about 10.5 such that a k value is calculated to be 0.982 at the wavelength of 1550 nm. If the core of an optical fiber has such stepped shape or shape of the α-th power, even the optical fiber has an increased effective area Aeff for suppressing non-linearity, the k value of the optical fiber is almost the same as the SSMF. For example, an optical fiber with a W-shaped structure disclosed in U.S. Patent No. 7,929,818 has a k value in a range from 0.987 to 1.047. Also, an optical fiber disclosed in U.S. Patent No. 7,555,187 and having a refractive index trench has a k value in a range from 0.967 to 1.011.

Accordingly, if the k value is 1.08 or larger, even though the mode filed diameter MFD is not changed, the effective area Aeff can be increased by 10% as compared with an optical fiber with a k value of 0.982. Accordingly, the non-linearity of the optical fiber can be efficiently suppressed while the dissimilar splice loss to a SSMF is maintained small. The k value is preferably large, and for example, the k value is more preferably 1.10 or larger.

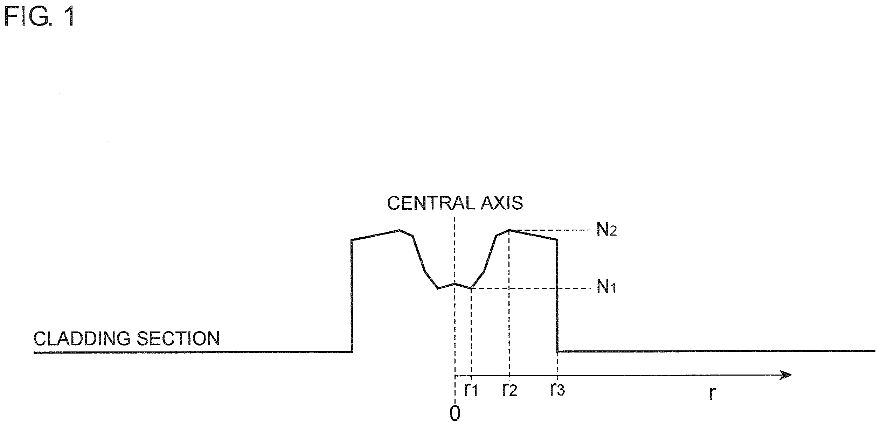

To achieve an optical fiber with a large k value, the core section of the optical fiber preferably has a refractive index profile as shown in Fig. 1. In particular, let r be a radial distance from the central axis of the core section, $r_1$ be a radial position at which the refractive index becomes a minimum value $N_1$ in the core section, $r_2$ be a radial position at which the refractive index becomes a maximum value $N_2$ in the core section, and $r_3$ be a radius of the core section. Then, $r_1 < r_2 < r_3$ is established. Also, R = $r_3/r_2$ is larger than 1.0 and equal to or smaller than 5.4, and a relative refractive index difference $\Delta_{12}$ of the maximum value $N_2$ with respect to the minimum value $N_1$ of the refractive index in the core section is in a range from 0.05% to 0.2%.

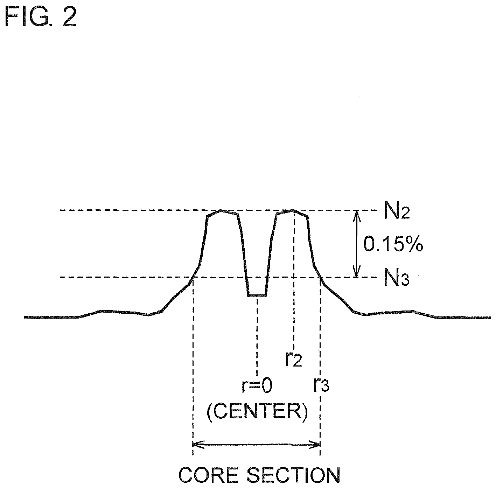

Herein, as shown in Fig. 2, the radius $r_3$ of the core section represents a position at which, 100×($N_2$ - $N_3$)/$N_2$ is 0.15% where $N_3$ is a refractive index at the radial position $r_3$. Also, the relative refractive index difference $\Delta_{12}$ of the maximum refractive index $N_2$ with respect to the minimum refractive index $N_1$ is expressed by Eq. 1:,

$$\Delta_{12} = 100 \cdot \frac{N_2{}^2 - N_1{}^2}{2N_2{}^2} \approx 100 \cdot \frac{N_2 - N_1}{N_2} . \quad \text{... Equation 1}$$

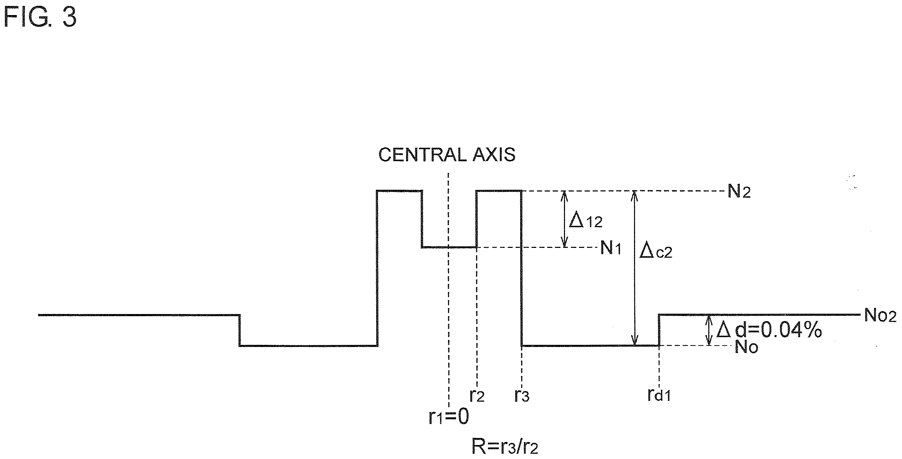

Next, the ranges of the k value and structural parameters of the optical fiber are described. In this case, numerical calculation was performed for an optical fiber having a refractive index profile as shown in Fig. 3. In this numerical calculation, the optical fiber is made of silica glass, a core section is solid, and each section has a stepped structure. The core section includes a first core portion containing the central axis and having a low refractive index, and a second core portion arranged around the first core portion and having a high refractive index. In the study with reference to Figs.

4 and 5, it was assumed that $r_1 = 0$ and $r_2$ is a value at the boundary between the first core portion and the second core portion.

The cladding section includes a first cladding portion (outer radius $r_{d1}$) being adjacent to the outer periphery of the core section and having a low refractive index of No, and a second cladding portion arranged outside the first cladding portion and having a high refractive index of $N_{O2}$. Herein, it is assumed that $\Delta_{c2} = 100 \times (N_2 - N_O)/N_2$ is a relative refractive index difference of the second core portion to the first cladding portion, and a relative refractive index difference of the second cladding portion to the first cladding portion of $\Delta d = 100 \times (N_{O2} - N_O)/N_{O2}$ is 0.04%. Also, it is assumed that the ratio ($r_{d1}/r_3$) of the outer radius $r_{d1}$ of the first cladding portion to the outer radius $r_3$ of the core section is 3.3. Such an optical fiber was used as a model, and numerical calculation was performed.

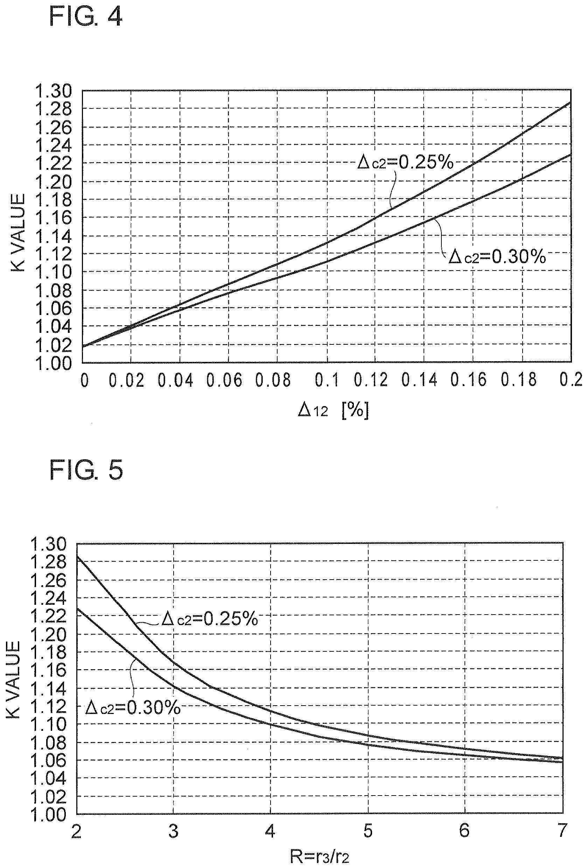

Figure 4 is a graph showing the relationship between $\Delta_{12}$ and a k value. In this case, $\Delta_{c2}$ was 0.25% and 0.30%, R = $r_3/r_2$ was 2.0, and a fiber cutoff wavelength was 1500 nm. If $\Delta_{c2}$ = 0.25%, it is preferable that $\Delta_{12}$ is 0.05% or higher because the k value becomes 1.08 or larger. Also, if $\Delta_{12}$ is 0.07% or higher, the k value becomes 1.10 or larger. If $\Delta_{12}$ is 0.11% or higher, the k value becomes 1.15 or larger. These cases are more preferable. If $\Delta_{c2}$ = 0.30%, the k value becomes 1.07 $\mu$m or larger as far as $\Delta_{12}$ is 0.05% or higher. It is preferable that $\Delta_{12}$ is 0.07% or higher because the k value becomes 1.08 or larger. If $\Delta_{12}$ is 0.11% or higher, it is more preferable because the k value becomes 1.12 or larger. Also, if there is a large refractive index dip around the center of the core section, an attenuation may be increased due to a large refractive index mismatching in the core area. Hence, $\Delta_{12}$ is preferably 0.2% or lower, and the core section preferably has a higher refractive index than that of the second cladding portion. Also, if $\Delta_{12}$ is 0.2% or lower, and $\Delta_{c2}$ is 0.25%, the maximum k value becomes 1.29.

Figure 5 is a graph showing the relationship between R = $r_3/r_2$ and a k value. In this case, $\Delta_{c2}$ was 0.25% and 0.30%, $\Delta_{12}$ was 0.20%, and a fiber cutoff wavelength was 1500 nm. If $\Delta_{c2}$ = 0.25%, it is preferable that R is 5.4 or smaller because the k value becomes 1.08 or larger. Also, if R is 4.4 or smaller, the k value becomes 1.10 or larger. If R is 3.2 or smaller, the k value becomes 1.15 or larger. These cases are more preferable. If $\Delta_{c2}$ = 0.30%, it is preferable that R is 5.4 or smaller because the k value becomes 1.07 or larger. Also, it is preferable that R is 4.4 or smaller because the k value becomes 1.09 or larger. Further, if R is 3.2 or smaller, it is more preferable because the k value becomes 1.13 or larger.

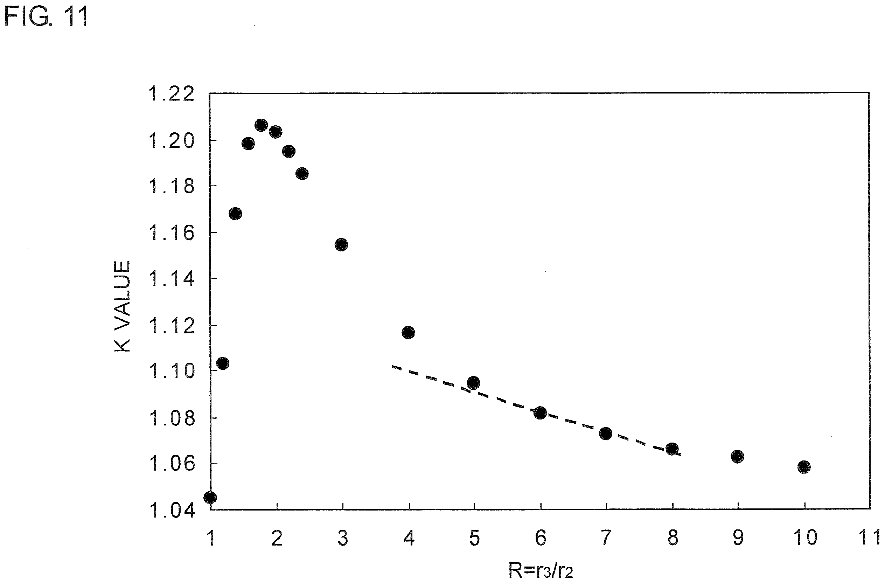

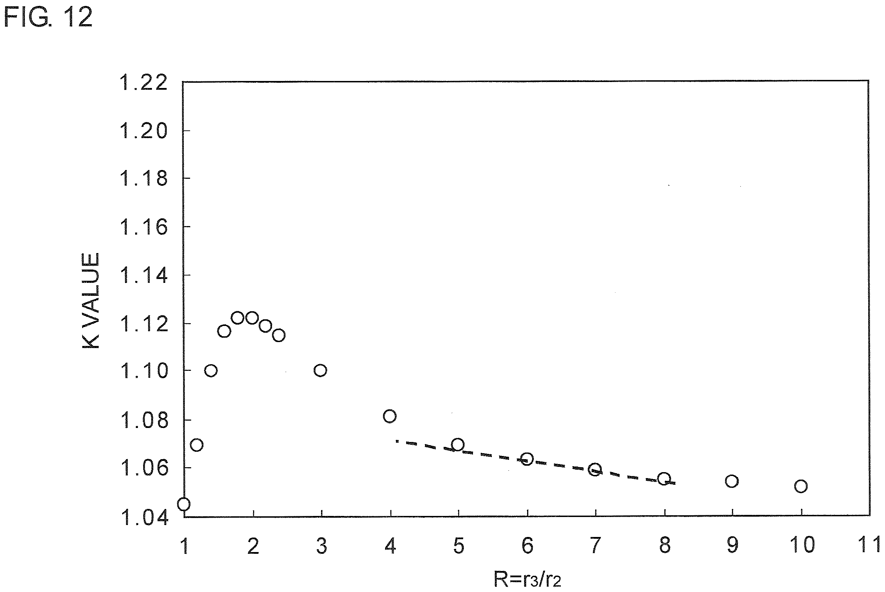

Figures 11 and 12 are graphs each showing the relationship between R = $r_3/r_2$ and a k value. In Fig. 11, $\Delta_{12}$ is 0.20%. In Fig. 12, $\Delta_{12}$ is 0.10%. Also, in either case, $\Delta_{c2}$ was determined so that the fiber cutoff wavelength became 1500 nm and Aeff at the wavelength of 1550 nm became 135 $\mu$m$^2$ when $\Delta d$ = 0.10% and $r_{d1}/r_3$ = 3.3. It is to be noted that when R = 1, the core section has a stepped shape without a dip at the center of the core. As shown in Fig. 11, when R = $r_3/r_2$ is in a range from about 1.3 to 4.0, it is particularly preferable because the k value becomes markedly large as compared with a case in which R is in a range from 1 to 1.3 and in a range of 5.0 or larger. In the case of Fig. 12, as compared with Fig. 11, the k value is decreased. However, it is preferable that R is in a range from about 1.3 to 4.0 like the case in Fig. 11 because the k value becomes markedly large as compared with the case in which R is in the range from 1 to 1.3 and in the range of 5.0 or larger.

Also, Table I shows the relationship among R = $r_3/r_2$, a radius $r_3$ of the core section, $\Delta_{c2}$, and MFD at the wavelength of 1550 nm when Aeff = 135 $\mu$m$^2$. Table I represents the graphs in Figs. 11 and 12.

Table I.

| R=r3/r2 | $\Delta$12 % | Aeff $\mu$m$^2$ | MFD $\mu$m | k Value | $\Delta$ c2 % | r3 $\mu$m |
|---|---|---|---|---|---|---|
| 1 | --- | 135 | 12.8 | 1.05 | 0.281 | 6.63 |
| 1.2 | 0.2 | 135 | 12.5 | 1.10 | 0.487 | 5.96 |
| 1.4 | 0.2 | 135 | 12.1 | 1.17 | 0.467 | 5.74 |
| 1.6 | 0.2 | 135 | 12.0 | 1.20 | 0.441 | 5.71 |
| 1.8 | 0.2 | 135 | 11.9 | 1.21 | 0.420 | 5.74 |
| 2.0 | 0.2 | 135 | 12.0 | 1.20 | 0.406 | 5.79 |
| 2.2 | 0.2 | 135 | 12.0 | 1.20 | 0.385 | 5.85 |
| 2.4 | 0.2 | 135 | 12.6 | 1.19 | 0.374 | 5.90 |
| 3.0 | 0.2 | 135 | 12.2 | 1.15 | 0.350 | 6.05 |
| 4.0 | 0.2 | 135 | 12.4 | 1.18 | 0.324 | 6.23 |
| 5.0 | 0.2 | 135 | 12.5 | 1.09 | 0.310 | 6.34 |
| 6.0 | 0.2 | 135 | 12.6 | 1.08 | 0.303 | 6.40 |

(continued)

| R=r3/r2 | Δ12 % | Aeff $\mu m^2$ | MFD $\mu m$ | k Value | Δ c2 % | r3 $\mu m$ |
|---|---|---|---|---|---|---|
| 7.0 | 0.2 | 135 | 12.7 | 1.07 | 0.297 | 6.45 |
| 8.0 | 0.2 | 135 | 12.7 | 1.07 | 0.293 | 6.49 |
| 9.0 | 0.2 | 135 | 12.7 | 1.06 | 0.292 | 6.51 |
| 10.0 | 0.2 | 135 | 12.7 | 1.06 | 0.289 | 6.54 |
| 1.2 | 0.1 | 135 | 12.7 | 1.07 | 0.388 | 6.26 |
| 1.4 | 0.1 | 135 | 12.5 | 1.10 | 0.380 | 6.10 |
| 1.6 | 0.1 | 135 | 12.4 | 1.12 | 0.370 | 6.06 |
| 1.8 | 0.1 | 135 | 12.4 | 1.12 | 0.360 | 6.07 |
| 2.0 | 0.1 | 135 | 12.4 | 1.12 | 0.352 | 6.10 |
| 2.2 | 0.1 | 135 | 12.4 | 1.12 | 0.344 | 6.13 |
| 2.4 | 0.1 | 135 | 12.4 | 1.11 | 0.339 | 6.17 |
| 3.0 | 0.1 | 135 | 12.5 | 1.10 | 0.320 | 6.27 |
| 4.0 | 0.1 | 135 | 12.6 | 1.08 | 0.305 | 6.40 |
| 5.0 | 0.1 | 135 | 12.7 | 1.07 | 0.297 | 6.46 |
| 6.0 | 0.1 | 135 | 12.7 | 1.06 | 0.293 | 6.50 |
| 7.0 | 0.1 | 135 | 12.7 | 1.06 | 0.290 | 6.53 |
| 8.0 | 0.1 | 135 | 12.8 | 1.06 | 0.288 | 6.55 |
| 9.0 | 0.1 | 135 | 12.8 | 1.05 | 0.287 | 6.56 |
| 10.0 | 0.1 | 135 | 12.8 | 1.05 | 0.285 | 6.58 |

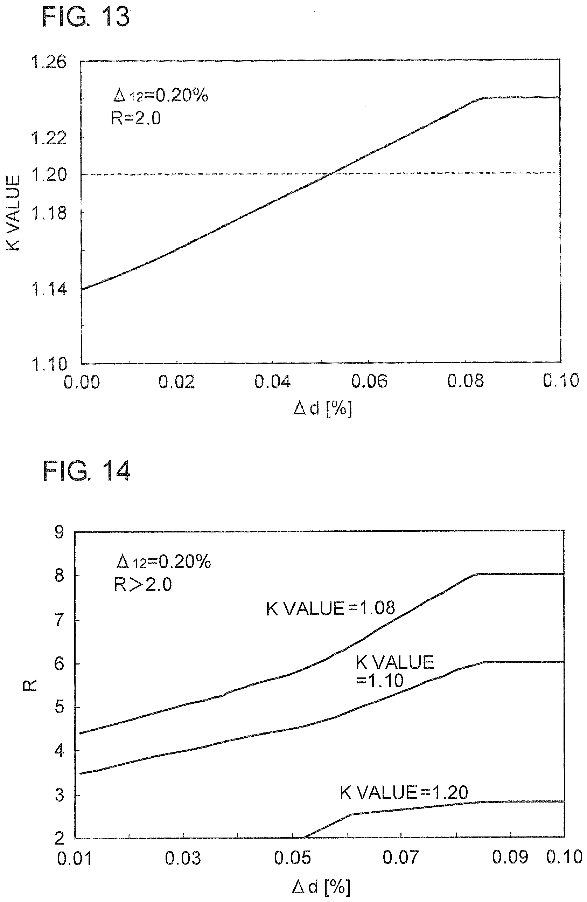

As shown in Figs. 11 and 12, the k value becomes the maximum when R is around 2. Regarding the optical fiber having the refractive index profile shown in Fig. 3, Fig. 13 shows the relationship between a relative refractive index difference Δd of the second cladding portion with reference to the refractive index of the first cladding portion and a k value when R = 2. At this time, $r_{d1}/r_3$ = 3.5, $\Delta_{12}$ was 0.20%, the cable cutoff wavelength was 1500 nm (the fiber cutoff wavelength was about 1620 nm), and Aeff at the wavelength of 1550 nm was 143 $\mu m^2$. As shown in Fig. 13, in either case, the k value is 1.10 or larger. Also, when Δd is about 0.05% or higher, it is particularly preferable because the k value becomes 1.20 or larger. Also, if Δd is about 0.08% or higher, it is markedly preferable because the k value becomes a substantially constant value that is as very large as about 1.24.

If R is about 2 $\mu m$ or larger, the larger the R value, the smaller the k value. Fig. 14 shows the relationship between Δd and R = $r_3/r_2$ when the k value is 1.08, 1.10, or 1.20. Herein, R is larger than 2. At this time, like the case in Fig. 13, $r_{d1}/r_3$ = 3.5, $\Delta_{12}$ was 0.20%, the cable cutoff wavelength was 1500 nm (the fiber cutoff wavelength was about 1620 nm), and Aeff at the wavelength of 1550 nm was 143 $\mu m^2$. As Δd becomes small, value of R with which the k value becomes larger is decreased. For example, when Δd = 0.04%, if R is 5.4 or smaller, the k value may become 1.08 or larger. Also, when Δd is 0.05% or higher, it is preferable that R is 6 or smaller because the k value may become 1.08 or larger. In particular, when Δd is 0.05% or higher, if R is 2 or larger and 3 or smaller, it is further preferable because the k value may become 1.20 or larger. The ratio $r_{d1}/r_3$ is preferably in a range from 2.5 to 4.0, because as far as the ratio $r_{d1}/r_3$ is in the range, there is no significant difference in attenuation property as compared with the attenuation property at $r_{d1}/r_3$ = 3.5 which is shown in Figs. 13 and 14.

Next, the upper limit of the mode field diameter MFD of the optical fiber is described. Let $W_1$ be a mode field diameter MFD of a first optical fiber, $W_2$ be a mode field diameter MFD of a second optical fiber, a dissimilar splice loss of the fusion spliced first and second optical fibers possibly caused by mismatching of the mode field diameters MFD of both the optical fibers can be estimated by Eq. 2:

$$\text{splice loss} = 10 \cdot \log\left[\left(\frac{2W_1 W_2}{W_1^2 + W_2^2}\right)^2\right] . \quad \text{... Equation 2}$$

Hence, if two optical fibers are connected by fusion splicing, the larger the difference between the mode filed diameters MFDs of both the optical fibers, the larger the dissimilar splice loss.

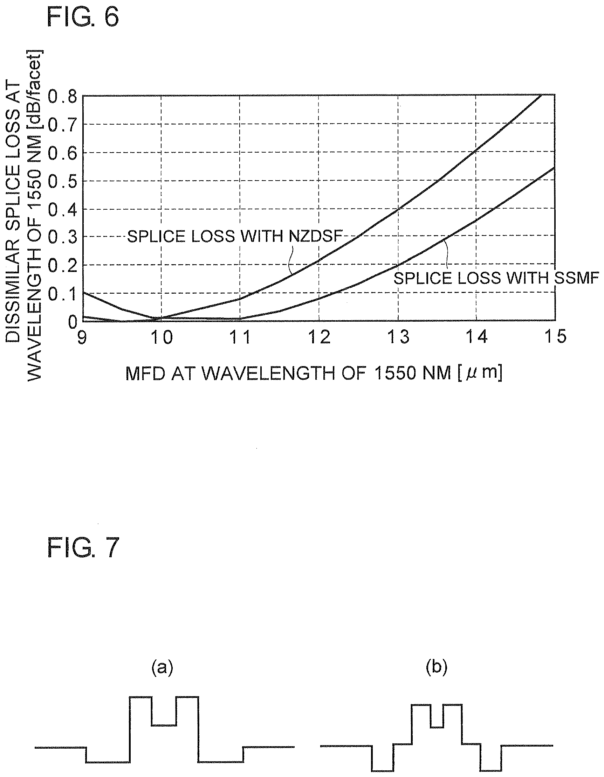

Figure 6 is a graph showing the relationship between a mode field diameter MFD and a splice loss of each optical fiber. In this case, second optical fiber was a SSMF (Aeff = 85 $\mu$m2, k value = 0.982) with a mode field diameter MFD of 10.5 $\mu$m at a wavelength of 1550nm, or a NZ-DSF (Aeff = 71 $\mu$m2, k value = 0.981) with a mode filed diameter MFD of 9.6 $\mu$m at a wavelength of 1550nm. Then, the dissimilar splice loss was calculated with Eq. 2 for the first optical fiber having each value of mode field diameters MFD.

The splice loss is preferably small. For example, the splice loss is preferably 0.4 dB/facet or smaller. In actual splicing, in addition to the splice loss caused by mismatching between the mode field diameters MFD expressed by Eq. 2, splice losses caused by misalignment of core axes of both the optical fibers and caused by axial curvature at end faces of both the optical fibers are generated. As the result, the entire splice loss may become larger than the value obtained by Eq. 2 by about 0.2 dB. Therefore, the splice loss calculated based on the mismatching between the mode field diameters MFD of both the optical fibers is desirably 0.2 dB/facet or smaller. Regarding fusion splicing with SSMF, the mode field diameter MFD at the wavelength of 1550 mn is preferably 13 $\mu$m or smaller. Also, regarding fusion splicing with NZ-DSF with a smaller mode field diameter MFD, the mode field diameter MFD at the wavelength of 1550 nm is further preferably 12 $\mu$m or smaller.

The larger the mode field diameter MFD, the larger the effective area Aeff. It is preferable because the non-linear phenomenon can be suppressed. If the k value is 1.21, the effective area Aeff is 100 $\mu$m2 or larger as far as the mode filed diameter MFD is 10.3 $\mu$m or larger. Hence, the mode field diameter MFD is preferably 10.3 $\mu$m or larger. The effective area Aeff at the wavelength of 1550 nm is further preferably 110 $\mu$m2 or larger (the mode field diameter MFD is 10.8 $\mu$m or larger). The effective area Aeff is the most preferably 120 $\mu$m2 or larger (the mode field diameter MFD is 11.3 $\mu$m or larger).

Also, the optical fiber with the increased effective area Aeff may have a degraded bend loss. For example, if a region with a low refractive index is provided around the outer periphery of the core section as shown in Figs. 7A and 7B, the bend loss can be decreased.

Next, the macro-bend loss of the optical fiber is described. The macro-bend loss of the optical fiber is preferably small. For example, if the optical fiber is wound with a diameter of 20 mm, the macro-bend loss at the wavelength of 1550 nm may be 100 dB/m or smaller, preferably 20 dB/m or smaller, or further preferably 10 dB/m or smaller. If the optical fiber is wound with a diameter of 30 mm, the macro-bend loss is decreased. With a diameter of 30 mm, the macro-bend loss at the wavelength of 1550 nm be 10 dB/m or smaller, preferably 2 dB/m or smaller, or further preferably 1 dB/m or smaller. In addition, if the optical fiber is wound with a diameter of 60 mm, the bend loss at the wavelength of 1625 nm be 0.01 dB/m or smaller, preferably 0.005 dB/m or smaller, or further preferably 0.002 dB/m or smaller.

Also, when the effective area Aeff is increased, the micro-bend loss is increased. The outer periphery of a cladding glass section of a transmission optical fiber is typically coated with two-layer-structure coating resins. In general, an optical fiber, in which an inner primary coating resin of the two-layer structure has a lower Young's modulus and an outer secondary coating resin of the two-layer structure has a higher Young's modulus, has a low micro-bend loss. More specifically, the Young's modulus of the primary coating resin be selected from a range from 0.2 MPa to 2 MPa, or preferably a range from 0.2 MPa to 1 MPa, and the Young's modulus of the secondary coating resin be selected from a range from 500 MPa to 2000 MPa, or more preferably a range from 1000 MPa to 2000 MPa. In addition, if a glass transition point of the primary coating resin is low, the Young's modulus is not increased even at low temperatures, resulting in that an increase in attenuation of the optical fiber at low temperatures becomes small. The glass transition point of the primary coating resin is preferably lower than the temperature of an actual use environment, and more particularly, the glass transition point is preferably -30°C or lower. Also, the glass transition point is further preferably -50°C or lower. The glass transition point of the secondary coating resin may be 70°C or higher.

Also, means for decreasing the micro-bend loss may be a method of increasing the cladding glass diameter of the optical fiber or the outer diameter of the coating resin. Either method is preferable. However, such an optical fiber is not practical because the difference in the diameters is increased with respect to a typically used optical fiber (a glass diameter of 125 $\mu$m, a coating outer diameter of 245 $\mu$m). The outer diameter of the cladding glass be in a range from 123 $\mu$m to 127 $\mu$m, and the outer diameter of the coating resin be in a range from 230 $\mu$m to 260 $\mu$m. In addition, an increase in attenuation caused by the micro-bend loss at the wavelength of 1550 nm be 1 dB/km or smaller (substantially equivalent to NZ-DSF for a submarine cable in actual use), preferably 0.6 dB/km or smaller (substantially equivalent to a non-zero dispersion shifted fiber for a submarine cable in actual use), or further preferably 0.3 dB/km or smaller (substantially equivalent to SSMF). In this case, the micro-bend loss is expressed by an increase in attenuation when an optical fiber is wound around a bobbin with a diameter of 400 mm, the surface of which is covered with a wire mesh with a diameter of 50 $\mu$m at an interval of 100 $\mu$m, with a winding tension of 0.8 N.

If the diameter of a mandrel of a bobbin around which an optical fiber is wound and spooled is large, a bend applied to the optical fiber is small. Thus, the attenuation when the optical fiber is wound is small. However, it is not preferable because the size of bobbin becomes too large. When such an optical fiber is wound on a mandrel with a diameter of 220 mm with a winding tension of 0.4 N or larger (a tension not causing a defect such as failure in winding condition during transportation) by a length of 10 km or larger, the attenuation at the wavelength of 1550 nm be 0.19 dB/km or smaller, preferably 0.18 dB/km or smaller, or further preferably 0.17 dB/km or smaller. As described above, the attenuation can be guaranteed as the actual value without increment due to winding on a mandrel in the state in which the long optical fiber is wound around the bobbin. Also, the diameter of the mandrel is preferably 150 mm or larger because an excessive bend loss is not generated.

Next, other characteristic and structure of an optical fiber are described. To suppress generation of the non-linear phenomenon in the optical fiber, chromatic dispersion of the optical fiber is preferably large. Particularly when wavelength division multiplexing (WDM) transmission is performed in an optical communication system, the non-linear phenomenon can be suppressed with reduction in pulse-pulse interference because a delay time difference is generated between different signal light wavelengths when signal light propagates through an optical fiber transmission line and with reduction in peak power because signal light pulses are spread on the time axis by a large chromatic dispersion (for example, see V. Curri, et al., IEEE Photon. Technol. Lett., vol. 22, No. 19, pp. 1446-1448, 2010).

SSMF has chromatic dispersion about +17 ps/nm/km at the wavelength of 1550 nm. Hence, chromatic dispersion at the wavelength of 1550 nm is preferably +19 ps/nm/km or larger that is larger by 10% or more. Also, since the optical fiber consists of silica-based glass, the chromatic dispersion at the wavelength of 1550 nm is preferably equivalent to or smaller than material dispersion of silica glass, i.e., +21.9 ps/nm/km or smaller. Also, the dispersion slope at the wavelength of 1550 nm is preferably +0.050 ps/nm$^2$/km or larger and +0.070 ps/nm$^2$/km or smaller.

When the cladding section serves as the reference refractive index (if the cladding section has a multi-layer structure, a refractive index at a radial position at a distance that is three times the radius $r_3$ of the core section serves as the reference), the relative refractive index difference $A_{c2}$ of the maximum value of the refractive index in the core section is preferably in a range from 0.25% to 0.55%. The radius $r_3$ of the core section is preferably 4.5 $\mu$m or larger and 7.0 $\mu$m or smaller. Within these ranges, it can be satisfied that the mode filed diameter MFD is in the range from 10.3 $\mu$m to 13.0 $\mu$m and the chromatic dispersion is in the range from +19.0 ps/nm/km to +21.9 ps/nm/km at the wavelength of 1550 nm.

The smaller the attenuation, the more the OSNR is improved. Accordingly, the attenuation at the wavelength of 1550 nm is preferably lower than 0.19 dB/km, further preferably 0.18 dB/km or smaller, or the most preferably 0.17 dB/km or smaller.

The core section of the optical fiber may be silica glass doped with $GeO_2$. In this case, the attenuation is in a range from about 0.175 dB/km to 0.19 dB/km. More preferably, the core section of the optical fiber is made of substantially pure silica glass, doped with only a halogen element, such as chlorine (C1) and/or fluorine (F), and not containing a typical metal element, such as germanium (Ge) or aluminum (Al), and a transition metal element, such as nickel (Ni) or copper (Cu), with a concentration larger than 0.01 atomic parts per million (ppm). Also, an alkali metal element, such as potassium (K), sodium (Na), and/or rubidium (Rb), is preferably doped in the core section by an average concentration of 0.01 atomic ppm to 50 atomic ppm. In this case, the attenuation can be decreased to a value in a range from 0.15 dB/km to 0.18 dB/km.

In addition, in the case of a pure silica core fiber including a core section substantially made of pure silica, the core section has a third-order non-linear refractive index n2 becomes $2.2 \times 10^{-20}$ m$^2$/W or smaller that is lower than a core doped with $GeO_2$, by 5% to 10%. Hence, such a pure silica core fiber is preferable. Herein, n2 is an effective value when the state of the polarization is random. (If the fiber is long enough, for example, the length is several kilometers or larger, the two orthogonal polarization modes of incident lightwave propagating in the fiber are randomly coupled with each other, and therefore, state of polarization becomes random.) More specifically, the n2 value of the pure silica core fiber is about $2.18 \times 10^{-20}$ m$^2$/W.

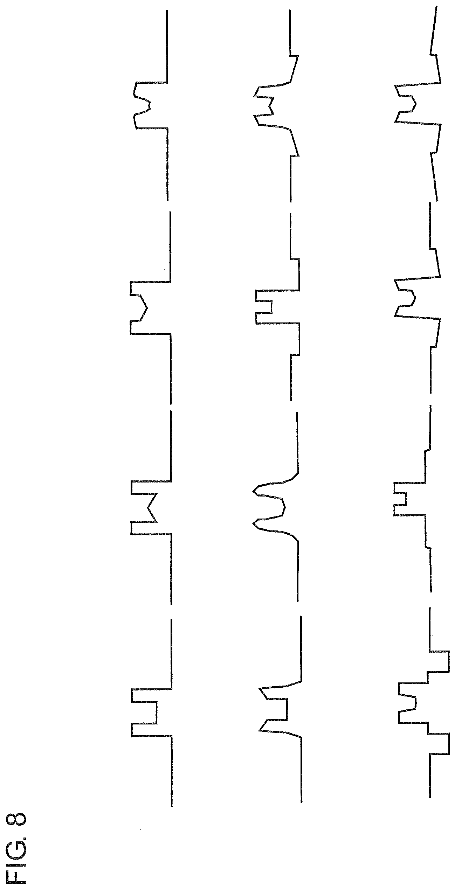

The attenuation at a wavelength of 1380 nm is, for example, preferably 0.8 dB/km or smaller, further preferably 0.4 dB/km or smaller, or the most preferably 0.3 dB/km or smaller. The polarization mode dispersion may be 0.2 ps/$\sqrt{m}$ or smaller. The cable cutoff wavelength is preferably 1520 nm or smaller, or further preferably 1450 nm or smaller that is a pump wavelength used for Raman amplification. The core section and the cladding section of the optical fiber may each have a refractive index structure, and may have, for example, a profile schematically shown in Figs. 7 and 8. However, it is not limited thereto.

The optical fiber according to the embodiment of the present invention has a small non-linearity, a low attenuation, and a small dissimilar splice loss. The optical transmission system constructed by the optical fiber can increase OSNR, and improve the transmission performance.

Examples

Next, Examples 1 to 10 of optical fibers according to the present invention are described. Any of the optical fibers of Examples 1 to 10 is made of silica-based glass and was manufactured by a known method.

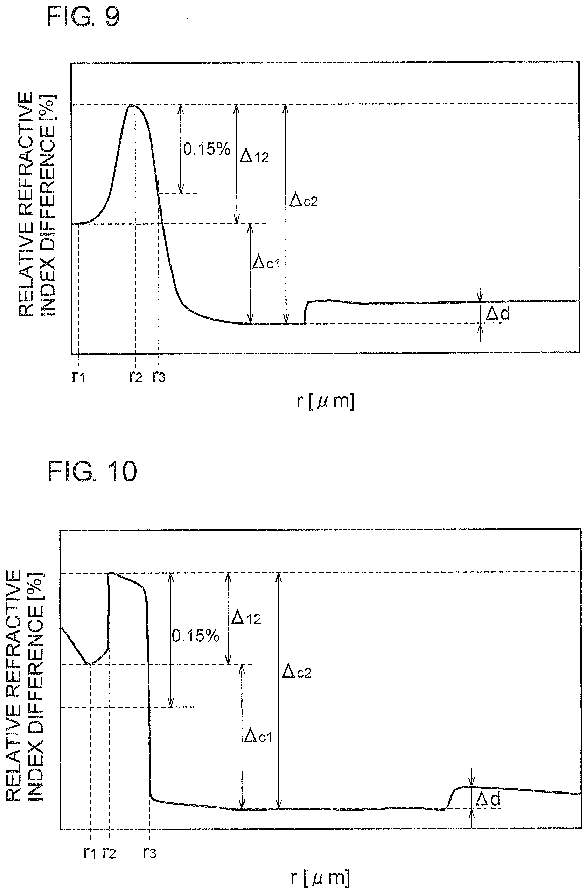

Figure 9 is an illustration schematically showing a refractive index profile of each of the optical fibers according to Examples 1 to 5. In each of the optical fibers according to Examples 1 to 5, a core section included a first core portion with a low refractive index and a second core portion with a high refractive index. Chlorine, fluorine, and low-concentration $GeO_2$ were doped to the first core portion. Chlorine, fluorine, and high-concentration $GeO_2$ were doped to the second core portion. The cladding section also had a refractive index profile. Chlorine and fluorine were doped to a first cladding portion with a low refractive index, and chlorine was doped to a second cladding portion with a high refractive index.

Figure 10 is an illustration schematically showing a refractive index profile of each of the optical fibers according to Examples 6 to 10. In each of the optical fibers according to Examples 6 to 10, a core section included a first core portion with a low refractive index and a second core portion with a high refractive index. Low-concentration chlorine and fluorine were doped to the first core portion. High-concentration chlorine was doped to the second core portion. The cladding section also had a refractive index profile. Chlorine and high-concentration fluorine were doped to a first cladding portion with a low refractive index, and chlorine and low-concentration fluorine were doped to a second cladding portion with a high refractive index. Also, very-low-concentration potassium was doped to each of the first core section, second core section, and first cladding section. The average concentration of potassium in the core section was several atomic ppm or smaller.

In either of the optical fibers according to Examples 1 to 10, a cladding glass portion had an outer diameter in a range from about 124 $\mu$m to 126 $\mu$m. A primary coating portion had an outer diameter in a range from 185 $\mu$m to 195 $\mu$m, and a Young's modulus in a range from 0.3 MPa to 0.6 MPa. A secondary coating portion had an outer diameter in a range from 235 $\mu$m to 250 $\mu$m, and a Young's modulus in a range from 1200 MPa to 1500 MPa. The attenuation was measured in a state in which an optical fiber with a length of about 50 km was wound around a bobbin having a mandrel with a diameter of 170 mm, with a winding tension of about 0.5 N. The dissimilar splice was made with a commercially available fusion splicer, and software for similar splicing of standard single mode fibers through core alignment. When the dissimilar splice loss was measured, an optical fiber according to each Example was fusion spliced to a SSMF (MFD = 10.5 $\mu$m, Aeff = 85 $\mu$m$^2$, k value = 0.982) or a NZ-DSF (MFD = 9.6 $\mu$m, Aeff = 71 $\mu$m$^2$, k value = 0.981) ten times and the maximum value and minimum value of ten splice losses were obtained.

Tables II to V are tables showing characteristics of the optical fibers according to Examples 1 to 10. As it was found from these tables, any of the optical fibers according to Examples 1 to 10 could provide good characteristics.

Table II.

| Example | $r_1$ $\mu$m | $r_2$ $\mu$m | $r_3$ $\mu$m | $R(r_3/r_2)$ | $\Delta_{12}$ % | $\Delta_{c1}$ % | $\Delta_{c2}$ % | $\Delta d$ % |
|---|---|---|---|---|---|---|---|---|
| 1 | 0.0 | 4.1 | 5.40 | 1.3 | 0.19 | 0.16 | 0.35 | 0.04 |
| 2 | 0.1 | 4.4 | 5.75 | 1.3 | 0.18 | 0.15 | 0.33 | 0.05 |
| 3 | 0.0 | 4.1 | 5.10 | 1.2 | 0.23 | 0.16 | 0.39 | 0.03 |
| 4 | 0.2 | 3.8 | 4.68 | 1.2 | 0.29 | 0.15 | 0.44 | 0.04 |
| 5 | 0.1 | 4.2 | 5.14 | 1.2 | 0.29 | 0.15 | 0.44 | 0.07 |
| 6 | 1.8 | 2.2 | 6.20 | 2.8 | 0.15 | 0.19 | 0.34 | 0.06 |
| 7 | 1.6 | 2.2 | 6.60 | 3.0 | 0.14 | 0.16 | 0.30 | 0.06 |
| 8 | 2.9 | 3.2 | 5.50 | 1.7 | 0.14 | 0.27 | 0.41 | 0.07 |
| 9 | 1.0 | 2.8 | 5.50 | 2.0 | 0.26 | 0.14 | 0.40 | 0.08 |
| 10 | 2.0 | 2.4 | 4.90 | 2.0 | 0.24 | 0.26 | 0.50 | 0.04 |

Table III.

| Example | MFD @1550nm $\mu$m | Aeff @1550nm $\mu$m$^2$ | K value | Attenuation | | | |
|---|---|---|---|---|---|---|---|
| | | | | @1310nm dB/km | @1380nm dB/km | @1550nm dB/km | @1625nm dB/km |
| 1 | 12.4 | 131 | 1.085 | 0.322 | 0.314 | 0.187 | 0.203 |

(continued)

| Example | MFD @1550nm μm | Aeff @1550nm μm² | K value | Attenuation | | | |
|---|---|---|---|---|---|---|---|
| | | | | @1310nm dB/km | @1380nm dB/km | @1550nm dB/km | @1625nm dB/km |
| 2 | 12.9 | 143 | 1.095 | 0.315 | 0.307 | 0.083 | 0.200 |
| 3 | 12.1 | 129 | 1.122 | 0.320 | 0.312 | 0.186 | 0.203 |
| 4 | 11.2 | 109 | 1.107 | 0.325 | 0.314 | 0.188 | 0.204 |
| 5 | 11.5 | 122 | 1.175 | 0.327 | 0.315 | 0.189 | 0.204 |
| 6 | 12.1 | 128 | 1.114 | 0.276 | 0.280 | 0.159 | 0.176 |
| 7 | 12.8 | 142 | 1.104 | 0.266 | 0.275 | 0.154 | 0.175 |
| 8 | 11.5 | 115 | 1.108 | 0.280 | 0.420 | 0.160 | 0.177 |
| 9 | 11.9 | 134 | 1.205 | 0.275 | 0.274 | 0.158 | 0.176 |
| 10 | 10.5 | 102 | 1.179 | 0.288 | 0.440 | 0.165 | 0.181 |

Table IV.

| Example | Dispersion @1550 nm ps/nm/km | Slope @1550 nm ps/nm²/km | Zero-dispersion wavelength μm | Fiber cutoff wavelength μm | Cable cutoff wavelength μm |
|---|---|---|---|---|---|
| 1 | 20.0 | 0.063 | 1.29 | 1.45 | 1.37 |
| 2 | 20.2 | 0.063 | 1.29 | 1.52 | 1.44 |
| 3 | 19.8 | 0.062 | 1.29 | 1.44 | 1.37 |
| 4 | 19.1 | 0.063 | 1.30 | 1.40 | 1.31 |
| 5 | 19.6 | 0.064 | 1.30 | 1.63 | 1.44 |
| 6 | 20.8 | 0.061 | 1.27 | 1.52 | 1.40 |
| 7 | 20.8 | 0.061 | 1.27 | 1.61 | 1.49 |
| 8 | 20.7 | 0.060 | 1.27 | 1.48 | 1.37 |
| 9 | 19.3 | 0.063 | 1.30 | 1.52 | 1.41 |
| 10 | 19.3 | 0.060 | 1.29 | 1.56 | 1.46 |

Table V.

| Ex. | Bend loss | | | Micro-bend loss @1550 nm dB/km | Splice loss to SSMF @1550nm dB/facet | Splice loss to NZDSF @1550nm dB/facet |
|---|---|---|---|---|---|---|
| | (20 mmφ) @1550 nm dB/m | (30 mmφ) @1550 nm dB/m | (60 mmφ) Maximum value between 1520 nm and 1625 nm dB/m | | | |
| 1 | 17 | 2.3 | 0.004 | 0.5 | 0.10 to 0.18 | 0.26 to 0.35 |
| 2 | 22 | 2.4 | 0.005 | 0.6 | 0.17 to 0.28 | 0.37 to 0.49 |
| 3 | 10 | 1.8 | 0.002 | 0.5 | 0.08 to 0.15 | 0.22 to 0.30 |
| 4 | 12 | 1.2 | 0.002 | 0.3 | 0.01 to 0.06 | 0.10 to 0.18 |
| 5 | 7 | 0.9 | 0.001 | 0.5 | 0.04 to 0.10 | 0.13 to 0.21 |
| 6 | 4 | 0.5 | 0.0005 | 0.4 | 0.08 to 0.16 | 0.22 to 0.30 |

(continued)

| Ex. | Bend loss | | | Micro-bend loss @1550 nm | Splice loss to SSMF @1550nm | Splice loss to NZDSF @1550nm |
|---|---|---|---|---|---|---|
| | (20 mmφ) @1550 nm dB/m | (30 mmφ) @1550 nm dB/m | (60 mmφ) Maximum value between 1520 nm and 1625 nm dB/m | dB/km | dB/facet | dB/facet |
| 7 | 6 | 0.9 | 0.0001 | 0.6 | 0.16 to 0.29 | 0.34 to 0.50 |
| 8 | 3 | 0.5 | 0.0005 | 0.4 | 0.03 to 0.09 | 0.14 to 0.22 |
| 9 | 9 | 1.2 | 0.0001 | 0.5 | 0.06 to 0.12 | 0.19 to 0.30 |
| 10 | 2 | 0.3 | 0.0003 | 0.2 | 0.01 to 0.04 | 0.03 to 0.10 |

**Claims**

1. An optical fiber comprising:

   a core section; and
   a cladding section,

   wherein, at a wavelength of 1550 nm,

   a k value expressed by $k = 4Aeff/(\pi MFD^2)$ is 1.08 or larger, Aeff being an effective area and MFD being a mode field diameter,
   a chromatic dispersion is +19.0 ps/nm/km or larger and +21.9 ps/nm/km or smaller, and

   the mode field diameter MFD is 10.3 $\mu$m or larger and 13.0 $\mu$m or smaller,
   **characterized in that**
   $r_1 < r_2 < r_3$ is established, $r_1$ being a radial position at which a refractive index becomes a minimum value $N_1$ in the core section, $r_2$ being a radial position at which the refractive index becomes a maximum value $N_2$ in the core section, and $r_3$ being a radius of the core section, and

   a relative refractive index difference $\Delta_{12}$ of the maximum value $N_2$ with respect to the minimum value $N_1$ of the refractive index in the core section is 0.05% or higher and 0.2% or lower.

2. The optical fiber according to claim 1, wherein
   the effective area Aeff at the wavelength of 1550 nm is 100 $\mu$m$^2$ or larger.

3. The optical fiber according to claim 1 or 2, wherein
   an attenuation at the wavelength of 1550 nm is 0.19 dB/km or smaller.

4. The optical fiber according to claim 3, wherein
   the core section is made of silica glass containing a halogen element with an average concentration of 1000 atomic ppm or larger and not containing a typical metal element or a transition metal element as a dopant with an average concentration larger than 0.01 atomic ppm.

5. The optical fiber according to claim 4, wherein
   the core section contains an alkali metal element with an average concentration in a range from 0.01 atomic ppm to 50 atomic ppm.

6. The optical fiber according to any of claims 1 to 5, wherein
   a dissimilar splice loss at an every splicing position with respect to a standard single mode optical fiber is 0.4 dB or smaller at the wavelength of 1550 nm.

7. The optical fiber according to any of claims 1 to 6, wherein

an attenuation at the wavelength of 1550 nm is 0.19 dB/km or smaller when the optical fiber is wound around the periphery of a mandrel with a diameter of 220 mm, with a winding tension of 0.4 N or larger by a length of 10 km or larger.

8. The optical fiber according to any of claims 1 to 7, wherein,
   $R = r_3/r_2$ is larger than 1.0 and equal to or smaller than 8.0, and wherein
   the cladding section includes at least a first cladding portion having a refractive index $N_O$ and a second cladding portion arranged at the outer periphery of the first cladding portion and having a refractive index $N_{O2}$, $N_O < N_{O2}$ is established, and a relative refractive index difference $\Delta d$ of the second cladding portion with reference to the first cladding portion is 0.08% or higher.

9. The optical fiber according to any of claims 1 to 7, wherein
   $R = r_3/r_2$ is larger than 1.0 and equal to or smaller than 5.4.

10. The optical fiber according to any of claims 1 to 7, wherein,
    $R = r_3/r_2$ is larger than 1.0 and equal to or smaller than 6.0, and wherein
    the cladding section includes at least a first cladding portion having a refractive index $N_O$ and a second cladding portion arranged at the outer periphery of the first cladding portion and having a refractive index $N_{O2}$, $N_O < N_{O2}$ is established, and a relative refractive index difference $\Delta d$ of the second cladding portion with reference to the first cladding portion is 0.05% or higher.

11. The optical fiber according to any of claims 8 to 10,
    wherein $4.5\ \mu m \leq r_3 \leq 7.0\ \mu m$ is established
    wherein a relative refractive index difference $\Delta_{c2}$ of the maximum value $N_2$ with respect to a refractive index $N_O$ at a radial position $r_O$ at a distance that is three times the radius $r_3$ from the center of the core section is 0.25% or higher and 0.55% or lower, and a relative refractive index difference $\Delta_{c1}$ of the minimum value $N_1$ with respect to the refractive index $N_O$ is 0.05% or higher.

12. The optical fiber according to any of claims 8 to 11, wherein $R = r_3/r_2$ is 1.2 or larger.


**Patentansprüche**

1. Optische Faser, umfassend:

   einen Kernbereich; und
   Mantelbereich,

   wobei, bei einer Wellenlänge von 1550 nm,

   ein k-Wert, der durch k = 4Aeff/($\pi$MFD$^2$) ausgedrückt wird, 1,08 oder größer ist, wobei Aeff eine effektive Fläche und MFD ein Durchmesser des Modenfelds ist,
   eine chromatische Dispersion +19,0 ps/nm/km oder größer und +21,9 ps/nm/km oder kleiner ist, und

   der Durchmesser des Modenfelds MFD 10,3 $\mu$m oder größer und 13,0 $\mu$m oder kleiner ist,
   **dadurch gekennzeichnet, dass**
   $r_1 < r_2 < r_3$ gilt, wobei $r_1$ eine radiale Position ist, an welcher ein Brechungsindex einen minimalen Wert $N_1$ in dem Kernbereich annimmt, $r_2$ eine radiale Position ist, bei welcher der Brechungsindex einen maximalen Wert $N_2$ in dem Kernbereich annimmt und $r_3$ ein Radius des Kernbereichs ist, und

   ein relativer Brechungsindexunterschied $\Delta_{12}$ des maximalen Werts $N_2$ bezüglich des minimalen Werts $N_1$ des Brechungsindex in dem Kernbereich 0,05% oder höher und 0,2% oder geringer ist.

2. Optische Faser nach Anspruch 1, wobei
   die effektive Fläche Aeff bei einer Wellenlänge von 1550 nm 100 $\mu$m$^2$ oder größer ist.

3. Optische Faser nach Anspruch 1 oder 2, wobei
   die Dämpfung bei einer Wellenlänge von 1550 nm 0,19 dB/km oder kleiner ist.

**4.** Optische Faser nach Anspruch 3, wobei
der Kernbereich aus einem Quarzglas hergestellt ist, das ein Halogenelement mit einer durchschnittlichen Konzentration von 1000 Atomteilen pro Millionen oder größer und kein typisches Metallelement oder Übergangsmetallelement als eine Dotierung mit einer durchschnittlichen Konzentration von mehr als 0,01 Atomteilen pro Millionen enthält.

**5.** Optische Faser nach Anspruch 4, wobei
der Kernbereich ein Alkalimetallelement mit einer durchschnittlichen Konzentration in einem Bereich von 0,01 Atomteilen pro Millionen bis 50 Atomteilen pro Millionen enthält.

**6.** Optische Faser nach einem der Ansprüche 1 bis 5, wobei
ein Verlust durch ungleiches Spleißen an jeder Spleißposition bezüglich einer Optischen Standardeinzelmodenfaser 0,4 dB oder kleiner bei einer Wellenlänge von 1550 nm ist.

**7.** Optische Faser nach einem der Ansprüche 1 bis 6, wobei
eine Dämpfung bei der Wellenlänge von 1550 nm 0,19 dB/km oder kleiner ist, wenn die optische Faser um einen Umfang einer Biegung mit einem Durchmesser von 220 mm gewickelt ist, wobei eine Wicklungsspannung von 0,4 N oder größer bei einer Länge von 10 km oder mehr ist.

**8.** Optische Faser nach einem der Ansprüche 1 bis 7, wobei
$R = r_3/r_2$ größer als 1,0 und gleich oder kleiner als 8,0 ist und wobei
der Mantelbereich mindestens einen Mantelabschnitt, der einen Brechungsindex $N_O$ aufweist, und einen zweiten Mantelabschnitt beinhaltet, der an dem äußeren Umfang des ersten Mantelabschnitts angeordnet ist und einen Brechungsindex $N_{O2}$ aufweist, wobei $N_O < N_{O2}$ gilt und ein relativer Brechungsindexunterschied $\Delta d$ des zweiten Mantelabschnitts mit Bezug zu dem ersten Mantelabschnitt 0,08% oder mehr ist.

**9.** Optische Faser nach einem der Ansprüche 1 bis 7, wobei
$R = r_3/r_2$ größer als 1,0 und gleich oder kleiner als 5,4 ist.

**10.** Optische Faser nach einem der Ansprüche 1 bis 7, wobei
$R = r_3/r_2$ größer als 1,0 und gleich oder kleiner als 6,0 ist und wobei
der Mantelbereich mindestens einen Mantelabschnitt, der einen Brechungsindex $N_O$ aufweist, und einen zweiten Mantelabschnitt beinhaltet, der an dem äußeren Umfang des ersten Mantelabschnitts angeordnet ist und einen Brechungsindex $N_{O2}$ aufweist, wobei $N_O < N_{O2}$ gilt und ein relativer Brechungsindexunterschied $\Delta d$ des zweiten Mantelabschnitts mit Bezug zu dem ersten Mantelabschnitt 0,05% oder mehr ist.

**11.** Optische Faser nach einem der Ansprüche 8 bis 10,
wobei $4,5\ \mu m \leq r_3 \leq 7,0\ \mu m$ gilt
wobei ein relativer Brechungsindex $\Delta_{c2}$ des maximalen Werts $N_2$ mit Bezug eines Brechungsindex $N_O$ an einer radialen Position $r_O$ in einem Abstand der drei Mal dem Radius $r_3$ von dem Zentrum des Kernbereichs entspricht, 0,25% oder höher und 0,55% oder weniger ist und ein relativer Brechungsindexunterschied $\Delta_{C1}$ des minimalen Werts $N_1$ bezüglich des Brechungsindex $N_O$ 0,05% oder mehr ist.

**12.** Optische Faser nach einem der Ansprüche 8 bis 11, wobei $R = r_3/r_2$ 1,2 oder mehr ist.


**Revendications**

**1.** Fibre optique comprenant :

une section de coeur ; et
une section de gaine,

dans laquelle, à une longueur d'onde de 1550 nm,

une valeur de k exprimée par $k = 4Aeff / (\pi MFD^2)$ est de 1,08 ou supérieure, Aeff étant une surface effective et MFD étant un diamètre de champ de mode,
une dispersion chromatique est de +19,0 ps/nm/km ou supérieure et de +21,9 ps/nm/km ou inférieure, et

le diamètre de champ de mode MFD est de 10,3 $\mu$m ou supérieur et de 13,0 $\mu$m ou inférieur,
**caractérisé en ce que**
$r_1 < r_2 < r_3$ est établi, $r_1$ étant une position radiale à laquelle un indice de réfraction devient une valeur minimale $N_1$ dans la section de coeur, $r_2$ étant une position radiale à laquelle l'indice de réfraction devient une valeur maximale $N_2$ dans la section de coeur, et $r_3$ étant un rayon de la section de coeur, et

une différence relative d'indices de réfraction $\Delta_{12}$ de la valeur maximale $N_2$ par rapport à la valeur minimale $N_1$ des indices de réfraction dans la section de coeur est de 0,05 % ou supérieure et de 0,2 % ou inférieure.

2. Fibre optique selon la revendication 1, dans laquelle
la surface effective Aeff à la longueur d'onde de 1550 nm est de 100 nm$^2$ ou supérieure.

3. Fibre optique selon la revendication 1 ou 2, dans laquelle une atténuation à la longueur d'onde de 1550 nm est de 0,19 dB/km ou inférieure.

4. Fibre optique selon la revendication 3, dans laquelle
la section de coeur est constituée de verre de silice contenant un élément halogène avec une concentration moyenne de 1000 ppm atomiques ou supérieure et ne contenant pas un élément métallique typique ou un élément de métal de transition comme dopant avec une concentration moyenne supérieure à 0,01 ppm atomique.

5. Fibre optique selon la revendication 4, dans laquelle
la section de coeur contient un élément de métal alcalin avec une concentration moyenne dans une plage allant de 0,01 ppm atomique à 50 ppm atomiques.

6. Fibre optique selon l'une quelconque des revendications 1 à 5, dans laquelle
une perte d'épissure différente à chaque emplacement d'épissure par rapport à une fibre optique monomode standard est de 0,4 dB ou inférieure à la longueur d'onde de 1550 nm.

7. Fibre optique selon l'une quelconque des revendications 1 à 6, dans laquelle
une atténuation à la longueur d'onde de 1550 nm est de 0,19 dB/km ou inférieure lorsque la fibre optique est enroulée autour de la périphérie d'un mandrin d'un diamètre de 220 mm, avec une tension d'enroulement de 0,4 N ou supérieure par une longueur de 10 km ou plus supérieure.

8. Fibre optique selon l'une quelconque des revendications 1 à 7, dans laquelle,
$R = r_3/r_2$ est supérieur à 1 et égal ou inférieur à 8, et dans laquelle
la section de gaine comprend au moins une première partie de gaine présentant un indice de réfraction $N_O$ et une seconde partie de gaine ménagée à la périphérie extérieure de la première partie de gaine et présentant un indice de réfraction $N_{O2}$, $N_O < N_{O2}$ est établi, et une différence relative d'indices de réfraction $\Delta d$ de la seconde partie de gaine par rapport à la première partie de gaine est de 0,08 % ou supérieure.

9. Fibre optique selon l'une quelconque des revendications 1 à 7, dans laquelle $R = r_3/r_2$ est supérieur à 1 et égal ou inférieur à 5,4.

10. Fibre optique selon l'une quelconque des revendications 1 à 7, dans laquelle,
$R = r_3/r_2$ est supérieur à 1 et égal ou inférieur à 6, et dans laquelle
la section de gaine comprend au moins une première partie de gaine présentant un indice de réfraction $N_O$ et une seconde partie de gaine ménagée à la périphérie extérieure de la première partie de gaine et présentant un indice de réfraction $N_{O2}$, $N_O < N_{O2}$ est établi, et une différence relative d'indices de réfraction $\Delta d$ de la seconde partie de gaine par rapport à la première partie de gaine est de 0,05 % ou supérieure.

11. Fibre optique selon l'une quelconque des revendications 8 à 10,
dans laquelle 4,5 $\mu$m $\leq r_3 \leq$ 7,0 $\mu$m est établi
dans laquelle une différence relative d'indices de réfraction $\Delta_{c2}$ de la valeur maximale $N_2$ par rapport à un indice de réfraction $N_O$ dans une position radiale $r_O$ à une distance qui est trois fois le rayon $r_3$ depuis le centre de la section de coeur est de 0,25 % ou supérieure et de 0,55 % ou inférieure, et une différence relative d'indices de réfraction $\Delta_{c1}$ de la valeur minimale $N_1$ par rapport à l'indice de réfraction $N_O$ est de 0,05 % ou supérieure.

12. Fibre optique selon l'une quelconque des revendications 8 à 11, dans laquelle

R = $r_3 / r_2$ est de 1,2 ou supérieur.

FIG. 1

FIG. 2

FIG. 3

CENTRAL AXIS

$N_2$

$\Delta_{12}$

$N_1$

$\Delta_{c2}$

$N_{o2}$

$\Delta d = 0.04\%$

$N_o$

$r_{d1}$

$r_3$

$r_2$

$r_1 = 0$

$R = r_3/r_2$

FIG. 4

FIG. 5

FIG. 6

FIG. 7

FIG. 8

## FIG. 9

## FIG. 10

FIG. 11

FIG. 12

EP 2 562 571 B1

## FIG. 13

## FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 00062106 A
- JP 2005202440 A
- JP 2011066063 A
- US 6421489 B
- US 6687441 B
- EP 1978383 A1
- US 7929818 B
- US 7555187 B

**Non-patent literature cited in the description**

- **V. CURRI et al.** *IEEE Photon. Technol. Lett.,* 2010, vol. 22 (19), 1446-1448